# EUROPEAN PATENT SPECIFICATION

(11) **EP 0 777 224 B1**
(45) Date of publication and mention of the grant of the patent: **03.07.2002**
(21) Application number: 96308559.2
(22) Date of filing: 27.11.1996
(51) Int. Cl.: G11B 7/24, G11B 7/00

(54) **Optical recording medium and method**
Optisches Aufzeichnungsmedium und optisches Aufzeichnungsverfahren
Milieu d'enregistrement optique et procédé d'enregistrement optique

(30) Priority: 01.12.1995 EP 95203301; 15.12.1995 EP 95203502; 15.12.1995 KR 9550705; 20.08.1996 EP 96306073; 25.11.1996 KR 9657073
(43) Date of publication of application: 04.06.1997
(73) Proprietor: SAMSUNG ELECTRONICS CO., LTD., Suwon-City, Kyungki-do (KR); Akzo Nobel N.V., 6824 BM Arnhem (NL)
(72) Inventor: Huh, Young-jae, Dongjak-gu, Seoul (KR); Min, Kyung-sun, Yongin-kun, Kyungki-do (KR); Kim, Jong-sung, Bundang-gu, Sungnam-city, Kyungki-do (KR); Dubbeldam, Gerrit Cornelis, 6904 PH Zevenaar (NL); van Wijk, Freddy Gerhard Hendrikus, 6814 BK Arnhem (NL); Maaskant, Nico, 6852 EN Huissen (NL)
(74) Representative: Tunstall, Christopher Stephen

(56) References cited:
- EP-A- 0 130 329
- EP-A- 0 474 311
- EP-A- 0 536 406
- US-A- 4 398 203

## Description

The present invention relates to a recordeble/replayable optical recording medium, and more particularly, to a recordable/replayable compact disc (CD) having a metal or non-metal recording layer and an optical recording method therefor.

Optical mediums are widely used as a high-density recording medium since the required recording area per unit recording amount is smaller than that of a conventional magnetic recording medium. Optical recording mediums are largely classified into three types according to their functions, i.e. ROM (read-only memory) available for only replaying recorded information, WORM (write-once read many) available for recording one time only, and RW (rewritable) available for erasing and re-recording after recording. The recorded information should be replayable in a player for a ROM-type recording medium. Thus, the "Red Book" standard for ROM-type recording medium should be observed, that is, the recording medium should have a reflectivity over 70% and CNR (carrier to noise ratio) of at least 47dB.

Recordable optical recording mediums reproduce information using a change in reflectivity due to physical deformation, a phase change, or a change of magnetism of a recording layer before and after recording. To be used as recording mediums compatible with CDs (compact discs), the optical recording medium should have long stability and high recording sensitivity in addition to the high reflectivity and the CNR features mentioned above. Various optical recording mediums have been proposed and partially implemented by using diverse materials to improve such features and facilitate the manufacturing of the medium.

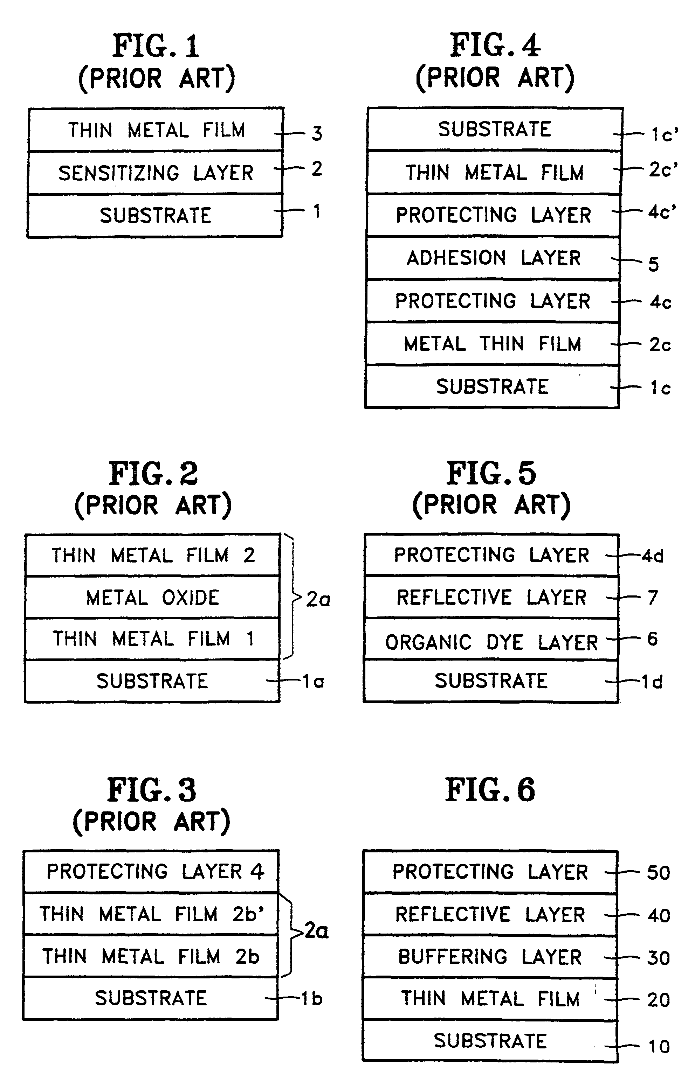

Figures 1 through 5 of the accompanying diagrammatic drawings are cross-sectional views illustrating the deposition structures of conventional optical recording mediums (discs).

According to Japanese Laid-open Patent Publication No. showa 63-268142, as shown in Figure 1, a recording medium has a structure comprising a substrate 1, a sensitizing layer 2 made of gelatin, casein or PVA overlaying substrate 1, and a thin metal film 3 of Cr, Ni, or Au having a thickness in the range of 50-500Å overlaying the sensitizing layer 2. In such a recording medium, the thin metal film absorbs during optical recording utilizing a laser beam and, thus, the sensitizing layer 2 and thin metal film 3 are deformed so that recording pits are formed. However, a recording medium of such a structure has difficulty in maintaining long-term stability since the recording pits are exposed.

U.S. Patent No. 4,973,520 discloses technology purportedly for obtaining superior recording features over 50dB by forming a thin metal film 2a of a three-layered structure of a first thin metal film 1, a metal oxide and a second thin metal film 2, the three-layered structure being superimposed on a substrate 1a as shown in Figure 2. However, since the pits are formed on the thin metal film 2a by laser radiation, thereby exposing the recording pits, recording stability also becomes inferior.

As shown in Figure 3, U.S. Patent No. 4,983,440 purports to compensate for such problems and discloses technology of forming two-layered thin metal film 2b and 2b' as a recording layer 2a on a substrate 1b and forming a protecting layer 4 for protecting the recording layer 2a thereon. However, the recording medium using this technology cannot be used as a medium compatible with conventional CD players since reflectivity is under 20% due to the absence of a reflective layer. A high-power light source is required if this incompatible medium is to be used in an otherwise conventional CD player.

Also, according to U.S. Patent No. 5,039, 558, as shown in Figure 4, stability of recording pits is improved by symmetrically adhering with an adhesion layer 5 a pair of substrates 1c and 1c' on which thin metal films 2c and 2c' and protecting layers 4c and 4c' are deposited. In this method, however, the thin metal films 2c and 2c' cannot act concurrently as a reflection film and a light absorptive layer so that reflectivity does not reach 70%, even in principle.

According to U.S. Patent No. 5,328, 813, a thin metal film is provided as a recording layer on a substrate, and a solid metal oxide layer is formed thereon to enhance the long-time stability of recorded signals and reflectivity up to 40% through 60%. However, it is a problem that CNR still remains low.

Further, U.S. Patents Nos. 4,990,388 and 5,155,723 disclose technology of forming an organic dye layer 6 as a recording layer on a substrate 1d and forming a reflection film layer 7 and a protecting layer 4d thereon, as shown in Figure 5. In recording information in this medium, the dye layer 6 absorbs a recording laser beam and generates heat to deform the substrate 1d. Thus, information can be recognized according to change of reflectivity before and after recording in a deformed area so that compatibility with conventional CD players under the condition of over 70% reflectivity and over 47dB CNR after recording can be available.

However, such a disc has problems including weak heat-resisting and light-resisting capabilities as well as employing expensive organic dyes. Further, the dye in a liquid state (being dissolved by an organic solvent) should be deposited on the substrate by a spin coating method. Since reflectivity varies sharply according to the thickness deviation of the coating layer, high-priced equipment which can control the thickness of the coating layer within a deviation between ±3% is required, and productivity is lowered due to the accuracy requirements for the dye thickness.

U.S. Patent No. 4,499,178 describes an optical recording medium that includes a substrate formed of plastic, glass, paper, metal or foil. A thin metal recording film overlies the substrate. A metal reflective layer overlies the thin metal recording film and is separated from it by an organic or inorganic insulating layer. A signal is recorded on the medium by heating the thin metal recording film with a laser beam to cause deformation of the recording film without causing deformation of the reflective layer.

Preferred embodiments of the present invention aim to provide a recordable/replayable optical recording medium and an optical recording method which are compatible with conventional CD players and also allow for lower manufacturing cost and high productivity.

It is another aim to provide a recordable/replayable optical recording medium and an optical recording method having a high reflectivity and recording signal, whose recording stability is improved.

Accordingly, the present invention provides a method of optically recording a signal on an optical recording medium comprising a substrate; a thin metal recording film formed on said substrate; a reflective layer disposed above said thin metal recording film; and a deformable buffering layer interposed between said thin metal recording film and said reflective layer, the method comprising the step of heating said thin metal recording film between said substrate and said buffering layer with a laser beam to cause deformation in at least one of said substrate, thin metal recording film and buffering layer, **characterised in that** said substrate has a pregroove, that said reflective layer is deformable and that the heating of said thin metal recording film also causes deformation of said reflective layer in a region of the pregroove, thereby forming pits where the deformation occurs, which pits represent said signal.

The invention extends to an optical recording medium on which a signal has been recorded by such a method.

For a better understanding of the invention, and to show how embodiments of the same may be carried into effect, reference will now be made, by way of example, to Figures 6 to 12 of the accompanying diagrammatic drawings, in which:
Figure 6 is a cross-sectional view illustrating the deposition structure of an optical recording medium (disc) according to one example of the present invention;
Figure 7 is a schematic cross-sectional view illustrating the structure of a pit being a recorded portion formed on the disc of Figure 6;
Figure 8 is a graph illustrating the reflection variation depending on the thickness variation of a buffering layer during recording with respect to the thickness variation of a thin metal film of the disc of Figure 6;
Figure 9 is a graph illustrating the variation of reflection depending on the thickness variation of a buffering layer in the disc of Figure 6;
Figure 10 is a graph illustrating the variation of writing power and CNR according to one example of the present invention;
Figure 11 is an AFM image of a substrate/thin metal layer on a recorded portion; and
Figure 12 is an AFM image of a buffering layer on a recorded portion.

In the example of the optical recording medium of Figure 6, a substrate 10 has a pregroove for guiding light during recording, a thin metal recording film 20 is formed on the substrate, and a buffering layer 30 and a reflective layer 40 are sequentially deposited on the substrate 10. A protecting layer 50 is optionally disposed on the reflective layer 40 for protecting the recording medium.

A concentrated recording laser beam heats the thin metal recording film 20 when optical recording is performed, and the heat is transferred to both the substrate 10 and the buffering layer 30. A portion of the substrate 10 adjacent to a portion of the heated thin metal film is deformed by thermal expansion, and the heated portion of thin metal recording film 20 swells up into the buffering layer 30 to form a pit. When the recorded information is reproduced, a recorded portion (i.e. pit) of the substrate 10 and a deformed portion of the thin film 20 bear lower reflectivity, relative to an unrecorded portion, due to the following principles.

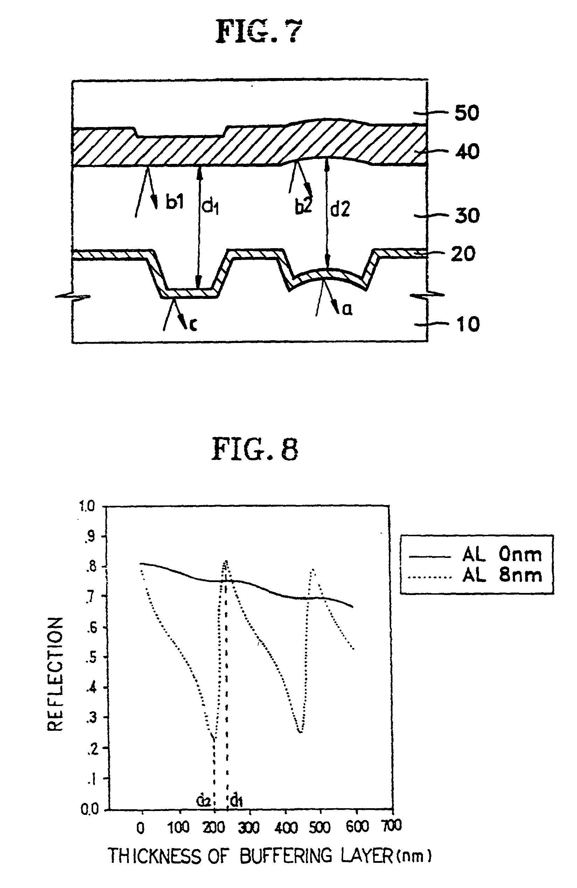

First, the reflectivity is lowered due to destructive interference caused by light reflected from a boundary surface between the substrate 10 and the thin metal recording film 20, and light reflected from a boundary surface between the buffering layer 30 and the reflective layer 40. That is, as shown in Figure 7, the thickness of the buffering layer 30 in an unrecorded portion is first determined as "d₁" to make light "b₁" reflected from the reflective layer 40 and light "c" reflected from the thin metal film 20 in a pregroove of the substrate 10 constructively interfere with one another. In a recorded portion, the substrate 10 and the thin metal film 20 swell up into the buffering layer 30 by thermal expansion and cause buffering layer 30 to deform. Thus, the thickness of the buffering layer 30 becomes thinner, i.e. to a thickness "d₂" at which destructive interference takes place. Moreover, the swelling up in the buffering layer 30 also causes the reflective layer 40 to deform. Accordingly, the reflectivity is lowered due to the destructive interference caused by light "a" reflected from a boundary surface between the substrate 10 and the thin metal film 20 and light "b₂" reflected from a boundary surface between the buffering layer 30 and the reflective layer 40.

The above phenomenon results from the Fabry-Perot effect, and as shown in Figure 8, the reflectivity of the recording medium varies according to the thickness of the buffering layer. Thus, the buffering layer should be manufactured using materials which can be deformed as much as the thickness "d₂," which is suitable for destructive interference resulting from deformation of the thin metal film 20.

Second, the reflectivity drops due to scattering of incipient light by the slanted and rounded walls formed in the recorded portion. That is, the substrate 10, the thin metal recording film 20 and buffering layer 30 are deformed as shown in Figure 7. Since there are slanted and rounded surfaces on both sides of the recorded portion, a recording beam becomes scattered at the side walls of the deformed portion of the thin metal film 20, so that reflectivity drops relative to the unrecorded portion where scattering of incident light does not occur. Accordingly, the recorded portion features lower reflectivity than an unrecorded portion, so that reproduction of recorded information can be available due to the difference of reflectivity between the recorded and unrecorded portions during playback.

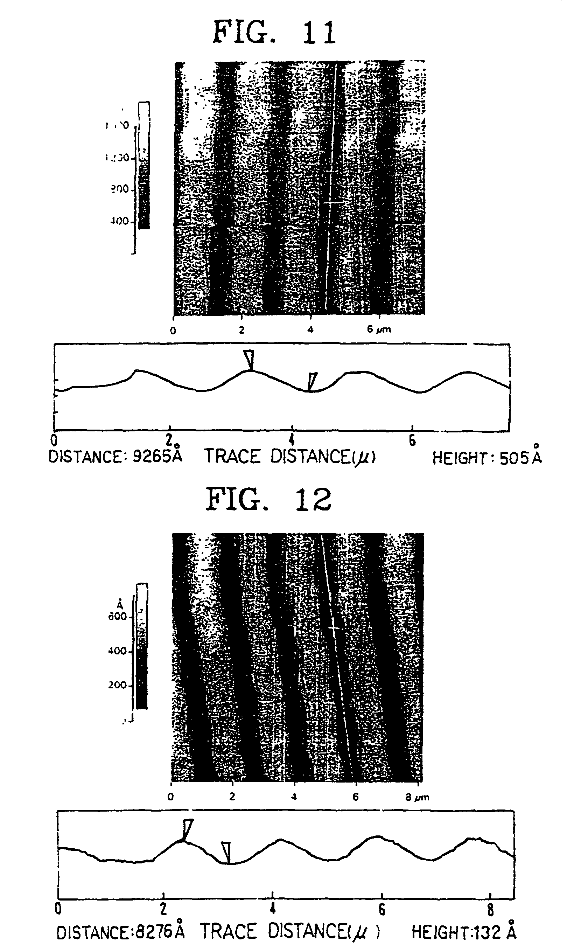

Third, when the thin metal film 20 absorbs the incident recording beam and the absorption portion is locally heated so that the temperature rises sharply, the materials of the thin metal film 20, the adjacent substrate 10 and the buffering layer 30 are locally thermal-decomposed so that the total reflectivity is lowered causing the reflection light "a" and "b₂" shown in Figure 7 to decrease. An AFM image of the deformation on substrate 10 and thin metal film 20 after removing upper layers is shown in Figure 11. Figure 12 shows an AFM image of the deformation on the buffering layer 30 after removing the reflective layer 40.

The above-described disc allows a reflectivity of 70% or higher in an unrecorded portion by installing a reflective layer 40 on a buffering layer 30 and adjusting the thickness of the buffering layer 30 so as to make light "b" reflected from the reflective layer 40 and light "c" reflected from the thin metal film 20 constructively interfere with one another. Particularly, the Fabry-Perot effect can be maximized by adjusting the reflectivity of the buffering layer 30 by adding or not by adding dye to the buffering layer 30.

In the aforementioned disc, substrate 10 is transparent with respect to a laser beam and can be manufactured of polycarbonate, polymethyl-metacrylate, epoxy, polyester or amorphous polyolefin, which has excellent impact intensity and is expansible by heat. The glass transition temperature for the thermal deformation of substrate 10 ranges from 80°C to 200°C and is preferably 100°C to 200°C. For guiding the laser beam during recording of information, it is necessary to form on substrate 10 a pregroove having a depth of 30 to 450nm and a width of 0.1 to 1.2µm.

Since the thin metal film 20 functions as a heat-generating layer for absorbing a recording laser beam and generating heat and a partial mirror for exhibiting contrast before and after recording, the absorption rate and the reflection should be constant. A suitable material has a thickness of 30Å to 500Å, a transmission of 5 to 95% and an absorption of 5-95%. Moreover, a non-metal film such as silicon and its compounds such as, for example, silicon nitride, silicon germanium, silica and SiO can be used.

Accordingly, as one of the optical properties of a material for forming such a thin metal or non-metal film, a complex refractive index preferably has a value (k) of an imaginary part which is greater than or equal to 0.01. If k is less than 0.01, the absorption during recording is lower and a recorded portion is deformed to a lesser degree, which leads to a lower recording sensitivity. From a computer simulation, it has been determined that materials for the thin metal film or non-metal film with k values that fall within a pentagon defined by the vertices 7.15+3.93i, 7.15+5.85i, 8.96+6.28i, 9.56+5.90i, and 8.14+3.77i in the n, k plane do not provide effective recording sensitivity for a desirable recordable compact disc.

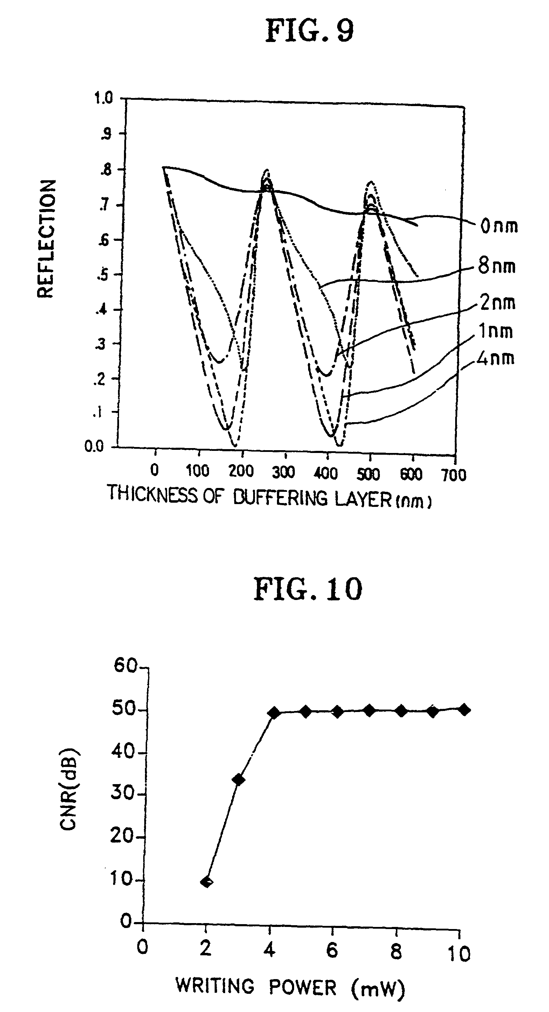

If the thickness of the thin metal film 20 is greater than 500Å, recording signals become smaller for the following reasons. First, the deformation of a recorded portion becomes less due to the hindered expansion of substrate 10 by the thin metal film 20 during recording. Second, as shown in Figure 9, the thicker the thin metal film 20, the smaller is the reduction of the reflectivity depending on the thickness variation of the protecting layer during recording, which lowers the contrast between the recorded and the unrecorded portions.

If the thickness of the thin metal film 20 is less than 30Å, the heat generation due to the absorption during recording becomes smaller, which makes it difficult to deform substrate 10.

Also, if the thermal conductivity of the thin metal film 20 is greater than or equal to 4W/cm°C, heat cannot concentrate on the thin film 20 when heated during recording and heating using the laser beam but instead is rapidly transferred around the thin metal film 20 so that heating exceeding a predetermined temperature becomes difficult. Even if the heating is possible, the size of the recorded portions may be increased to reach an adjacent track. Thus, the thermal conductivity of the thin metal film should be set to 4W/cm°C or below.

A linear expansion coefficient of the thin metal film 20 is preferably 3x10⁻⁶/°C. If less than this, cracks may be generated in the thin metal film 20 by the expansion of the deformed substrate 10 during recording, thereby reducing the possibility of obtaining a uniform recording signal value.

As materials for the thin metal film 20 sufficient to fulfill the above conditions, at least one metal selected from the group consisting of Au, Al, Cr, Cu, Ni, Pt, Ag, Fe, Ti, Ta and an alloy thereof can be adopted. The thin metal film 20 formed of such a material is deposited on the substrate 10 by a vacuum deposition method, an electron beam method or a sputtering method.

The buffering layer 30 for absorbing the deformation of the substrate 10 and the thin metal film 20, is easily deformed and is preferably formed of an organic material having appropriate mobility. The glass transition temperature of the buffering layer 30 preferably ranges from 60°C to 180°C and should be lower than that of the substrate 10. Here, if the glass transition temperature of the buffering layer 30 is lower than 60°C, the recording stability may be reduced. The buffering layer 30 formed of an organic material is dissolved in an organic solvent to then be coated by a spin coating method. At this time, a material which dissolves the organic material well but does not damage substrate should be adopted as the solvent. The thickness of the buffering layer 30 is set to have a reflectivity of 70% or higher, as shown in Figure 9. At this time, the range of 50 to 10,000Å is suitable.

The organic material which can be used as the buffering layer 30 includes a vinyl-alcohol resin, a vinylacetate resin, an acrylate resin, a polyester resin, a polyether resin, a polystyrene resin, an urethane resin, a cellulose resin, a fatty acid and low molecular weight organic compound. Also, copolymers of the above materials may be used as the buffering layer 30.

In order to facilitate the thermal deformation of substrate during recording, an organic dye may be added to the buffering layer 30. If the dye is added, the buffering layer 30 is also heated during recording, which makes the deformation of substrate easier. The amount of added dye should be less than 30wt% of the buffering layer material. More than this amount of dye makes it difficult to obtain a higher reflectivity. A dye that absorbs the incident light during recording is chosen, depending upon a short (i.e. high density optical discs) or long (i.e. low density optical discs) wavelength of the recording laser beam. Preferably near-infrared dyes which absorb in the wavelength range of 780 to 850nm, or dyes which absorbs in the wavelength range of 610 to 700nm are used. For example, cyanine, croconium, squarrylium, phthalocyanine, or naphthalocyanine can be used.

The reflective layer 40 may be formed by a vacuum deposition method, an electron beam method or a sputtering method. Metals such as Au, Al, Cu, Cr, Ni, Pt, Ag, Fe, Ti, Ta and alloys thereof may be adopted as the material of the reflective layer 40, and the thickness thereof may range from 500Å to 1500Å.

The protecting layer 50 for protecting the recording medium can be a transparent material which has a strong impact strength and is cured by ultraviolet (UV) rays. Epoxy or acrylate-series curing resin may be coated by a spin coating method and then cured by UV rays thus forming the protecting layer 50.

Although the above example of the present invention has been described in terms of deformation of each layer (i.e. substrate, thin metal film and buffering layer and reflective layer), it should be noted that deformation may alternatively occur in only one or two layers, depending on the laser beam power and/or the physical properties (e.g. Young's modulus, thermal conductivity, thermal expansion coefficient, glass transition temperature, etc.) of each layer. It should be noted that thermal deformation of the metal thin film itself is uncommon due to its very high melting temperature. However, the thermal deformation of the thin metal film can occur, depending on the laser beam power. For example, when the recording laser beam power is high, the thin metal recording film 20 can be melted to form a rim around the center of focused light by heating above the metal melting point.

Moreover, deformation can be only in the substrate 10 if the material used for a buffering layer has stable physical properties (e.g. lower thermal expansion coefficient, higher glass transition temperature, and/or higher Young's modulus) than the material used for the substrate 10. It should be noted that deformation may occur in the thin metal film 20 and the buffering layer 30 by the heat transfer in the thin metal film 20 during laser recording. However, the deformation in the thin metal film 20 and the buffering layer 30 may be so low that it is very difficult to observe. Also such deformation may have little effect during recording.

Furthermore, if the material used for the substrate has stable physical properties compared to the material used for the buffering layer 30, then deformation may occur mainly in the buffering layer 30. It is also possible that deformations may mainly occur in both the substrate 10 and the buffering layer 30, when the materials for substrate 10 and buffering layer 30 have similar physical properties.

Further numbered examples of the embodiments of the present invention will now be described in further detail. However, it should be understood that the present invention is by no means restricted to such specific examples.

### Example 1

An Al thin film of 10nm was vacuum-deposited on a 1.2 mm thick polycarbonate substrate having a pregroove with a depth of 170nm and a width of 0.5µm and track pitch of 1.6µm. A coating solution formed by dissolving 0.9g of cyano-biphenylepoxyamine in 10ml of diacetone alcohol was spin-coated at a rate of 2000rpm to form a buffering layer thereon. At this time, the thickness of the buffering layer of the pregroove portion was measured by scanning electron microscopy (SEM) and the result was about 2500Å. After drying in a vacuum oven maintaining 40°C for four hours, Al of 1000Å was vacuum-deposited to form a reflective layer. Epoxyacrylate UV curing resin was spin-coated thereon to then be cured, thereby fabricating a disc.

The disc was evaluated using evaluation equipment adopting a laser beam of 780nm. CNR of 51dB and 72% reflectivity were obtained at 1.3m/sec, 720kHz and 8mW recording conditions with 0.7mW writing power. In the case of recording speed of 4.8m/sec with a writing power of 10mW, then a CNR of 42dB was obtained. If the writing power of the above recording conditions is changed, as shown in Figure 10, a recorded signal having a CNR of 47dB or higher could be reproduced at 4mW or more. If audio recording is performed in an RP-1000CD manufactured by Pioneer Corp., this disc was replayable in a compact disc player. An evaluation result of recording characteristics using a CD-CATS was proved to satisfy all items of CD specification.

### Examples 2-3

In contrast with the first example, the thickness of Al thin film was changed to 7nm (second example) and 12nm (third example), respectively. However, the subsequent processes were the same with those of the Example 1, in fabricating the disc. Also, the recording evaluation was performed with the same evaluation conditions as those in the first example. The result showed that the disc made of 7nm thin metal film had a reflectivity of 73% and CNR of 48dB, and the disc made of 12nm thin metal film had a reflectivity of 69% and CNR of 53dB.

### Examples 4-8

In contrast with the above examples, the metal was replaced with Au, Cu, Ag, Ni or Pt as indicated in the following table, and the disc was fabricated in the same method as that of the first example to be evaluated.

**Table 1**

| Example | Thin metal film | Reflectivity (%) | CNR(dB) |
|---|---|---|---|
| 4 | Au | 72 | 50 |
| 5 | Cu | 70 | 47 |
| 6 | Ag | 69 | 50 |
| 7 | Pt | 73 | 52 |
| 8 | Ni | 73 | 52 |

### Examples 9-13

In contrast with the above examples, the material of the buffering layer was changed into a PMMA having Mw of 25,000, a PVA having Mw of 35,000 or a polyethyleneoxide having Mw of 32,000, all manufactured by Polyscience, or a fatty acid manufactured by Tokyo Kasei (standard kit FE M-1). The thickness of a buffering layer in a pregroove was adjusted to be 2500Å and then the recording evaluation was performed in the same manner as that of the first example.

**Table 2**

| Example | Material of buffering layer | Reflectivity (%) | CNR (dB) |
|---|---|---|---|
| 9 | PMMA | 71 | 48 |
| 10 | PVAC | 72 | 50 |
| 11 | PVA | 71 | 49 |
| 12 | Polyethyleneoxide | 70 | 50 |
| 13 | Fatty acid | 72 | 52 |

### Example 14

In forming a buffering layer, NK125 (Nippon Kankoh Shikisho Kenkyusho Co.) was added to the buffering layer by as much as 0.5wt% of the buffering layer material. The subsequent processes were the same as those of the first example, in fabricating the disc. When recording was performed with a disc of 1.3m/sec and 8mW, a CNR of 52dB was obtained. When recording was performed at 4.8m/sec, the CNR was 48dB. Also, the reflectivity was about 70%. The disc could be used for a CD-R.

In the above described examples of the present invention, recording is allowed by adopting a buffering layer, and compatibility with a CD is possible. Particularly, since expensive organic dye is not used, the manufacturing cost can be reduced and the productivity can be greatly improved.

It will be appreciated by those skilled in the art that the above exemplary embodiments of the present invention are illustrative and not restrictive of the scope of the present invention.

Through the above-described steps, optically recordable/readable pits may be formed. Here, the pits represents portions deformed by the laser beam. The term "optically recordable/readable pits or pits" generally include optically readable or detectable marks of all kinds. The deformed portions of the substrate and thin metal layer and buffering layer have different optical properties from those of undeformed portions.

## Claims

1. A method of optically recording a signal on an optical recording medium comprising a substrate (10); a thin metal recording film (20) formed on said substrate (10); a reflective layer (40) disposed above said thin metal recording film (10); and a deformable buffering layer (30) interposed between said thin metal recording film (20) and said reflective layer (40), the method comprising the step of heating said thin metal recording film (20) between said substrate (10) and said buffering layer (30) with a laser beam to cause deformation in at least one of said substrate (10), thin metal recording film (20) and buffering layer (30), **characterised in that** said substrate has a pregroove, that said reflective layer is deformable and that the heating of said thin metal recording film (20) also causes deformation of said reflective layer (40) in a region of the pregroove, thereby forming pits where the deformation occurs, which pits represent said signal.

2. An optical recording medium on which a signal has been recorded by a method according to claim 1.

3. An optical recording medium according to claim 2, further comprising a protective layer (50) disposed on said reflective layer (40).

4. An optical recording medium according to claim 2 or 3, wherein at least one of said pregrooved substrate (10), thin metal recording film (20) and buffering layer (30) is arranged to deform.

5. An optical recording medium according to claim 4, wherein all of said substrate (10), thin metal recording film (20) and buffering layer (30) are arranged to deform in a region of the pregroove.

6. An optical recording medium according to claim 5, wherein said substrate (10), thin metal recording film (20) and buffering layer (30) are arranged to deform in a region of the pregroove such that said buffering layer (30) has a reduced thickness portion (d2) in said region.

7. An optical recording medium according to any one of claims 2-6, wherein said buffering layer (30) comprises an organic material.

8. An optical recording medium according to any of claims 2-7, wherein said reflective layer (40) is arranged to deform in a region of the pregroove.

9. An optical recording medium according to any of claims 2-8, wherein said thin metal recording film (20) has a complex refractive index of which the imaginary part is greater than or equal to 0.01.

10. An optical recording medium according to any of claims 2-9, wherein said thin metal recording film (20) has a thickness in a range of 30A to 500A.

11. An optical recording medium according to any of claims 2-10, wherein said thin metal recording film (20) comprises a material selected from a group consisting of Au, Al, Ag, Pt, Cu, Cr, Ni, Ti, Ta, Fe and alloys thereof.

12. An optical recording medium according to any of claims 2-11, wherein said buffering layer (30) has a thickness in a range of 50A to 10000A.

13. An optical recording medium according to any of claims 2-12, wherein said buffering layer (30) has a glass transition temperature within a range of 60°C to 180°C.

14. An optical recording medium according to any of claims 2-13, wherein said buffering layer (30) contains an organic dye (preferably less than 30% by weight).

15. An optical recording medium according to any of claims 2-14, wherein said reflective layer (40) comprises a material selected from a group consisting of Au, Al, Ag, Pt, Cu, Cr, Ni, Ti, Ta, Fe and alloys thereof.

16. An optical recording medium according to any of claims 2-15, wherein said thin metal recording film (20) has a thermal conductivity of no more than 4W/cm°C.

## Patentansprüche

1. Verfahren zum optischen Aufzeichnen eines Signals auf einem optischen Aufzeichnungsmedium, das ein Substrat (10), eine dünne Metall-Aufzeichnungsfolie (20), die auf dem Substrat (10) gebildet ist, eine reflektierende Schicht (40), die über der dünnen Metall-Aufzeichnungsfolie (20) angeordnet ist, und eine verformbare Pufferschicht (30) aufweist, die sich zwischen der dünnen Metall-Aufzeichnungsfolie (20) und der reflektierenden Schicht (40) befindet, wobei das Verfahren die Schritte umfaßt: Erhitzen der dünnen Metall-Aufzeichnungsfolie (20) zwischen dem Substrat (10) und der Pufferschicht (30) mit einem Laserstrahl, um in zumindest einem von dem Substrat (10), der dünnen Metall-Aufzeichnungsfolie (20) und der Pufferschicht (30) eine Verformung zu bewirken, **dadurch gekennzeichnet, daß** das Substrat eine Vorrille hat, daß die reflektierende Schicht verformbar ist und daß das Erhitzen der dünnen Metall-Aufzeichnungsfolie (20) auch eine Verformung der reflektierenden Schicht (40) in einem Gebiet der Vorrille bewirkt, wodurch Löcher gebildet werden, wo die Verformung stattfindet, wobei die Löcher das Signal darstellen.

2. Optisches Aufzeichnungsmedium, auf dem ein Signal durch ein Verfahren gemäß Anspruch 1 aufgezeichnet ist.

3. Optisches Aufzeichnungsmedium nach Anspruch 2, außerdem mit einer Schutzschicht (50), die auf der reflektierenden Schicht (40) angeordnet ist.

4. Optisches Aufzeichnungsmedium nach Anspruch 2 oder 3, bei dem zumindest eines von dem vorgerillten Substrat (10), der dünnen Metall-Aufzeichnungsfolie (20) und der Pufferschicht (30) angeordnet ist, um sich zu verformen.

5. Optisches Aufzeichnungsmedium nach Anspruch 4, bei dem alle von dem Substrat (10), der dünnen Metall-Aufzeichnungsfolie (20) und der Pufferschicht (30) angeordnet sind, um sich in einem Gebiet der Vorrille zu verformen.

6. Optisches Aufzeichnungsmedium nach Anspruch 5, bei dem das Substrat (10), die dünne Metall-Aufzeichnungsfolie (20) und die Pufferschicht (30) angeordnet sind, um sich in einem Gebiet der Vorrille so zu verformen, daß die Pufferschicht (30) in diesem Gebiet einen Bereich (d2) mit verminderter Dicke hat.

7. Optisches Aufzeichnungsmedium nach einem der Ansprüche 2-6, bei dem die Pufferschicht (30) ein organisches Material enthält.

8. Optisches Aufzeichnungsmedium nach einem der Ansprüche 2-7, bei dem die reflektierende Schicht (40) dazu ausgestaltet ist, um sich in einem Gebiet der Vorrille zu verformen.

9. Optisches Aufzeichnungsmedium nach einem der Ansprüche 2-8, bei dem die dünne Metall-Aufzeichnungsfolie (20) einen komplexen Brechungsindex hat, von dem der imaginäre Anteil größer oder gleich 0,01 ist.

10. Optisches Aufzeichnungsmedium nach einem der Ansprüche 2-9, bei dem die dünne Metall-Aufzeichnungsfolie (20) eine Dicke in einem Bereich 30 A bis 500 A hat.

11. Optisches Aufzeichnungsmedium nach einem der Ansprüche 2-10, bei dem die dünne Metall-Aufzeichnungsfolie (20) ein Material enthält, das aus einer Gruppe ausgewählt ist, die Au, Al, Ag, Pt, Cu, Cr, Ni, Ti, Ta, Fe und Legierungen davon beinhaltet.

12. Optisches Aufzeichnungsmedium nach einem der Ansprüche 2-11, bei dem die Pufferschicht (30) eine Dicke in einem Bereich von 50 A bis 10000 A hat.

13. Optisches Aufzeichnungsmedium nach einem der Ansprüche 2-12, bei dem die Pufferschicht (30) eine Glasübergangstemperatur in einem Bereich von 60°C bis 180°C hat.

14. Optisches Aufzeichnungsmedium nach einem der Ansprüche 2-13, bei dem die Pufferschicht (30) einen organischen Farbstoff enthält (vorzugsweise weniger als 30 Gewichtsprozent).

15. Optisches Aufzeichnungsmedium nach einem der Ansprüche 2-14, bei dem die reflektierende Schicht (40) ein Material enthält, das aus einer Gruppe ausgewählt ist, die Au, Al, Ag, Pt, Cu, Cr, Ni, Ti, Ta, Fe und Legierungen davon beinhaltet.

16. Optisches Aufzeichnungsmedium nach einem der Ansprüche 2-15, bei dem die dünne Metall-Aufzeichnungsfolie (20) eine thermische Leitfähigkeit von nicht mehr als 4W/cm°C hat.

## Revendications

1. Procédé d'enregistrement optique d'un signal sur un support d'enregistrement optique comprenant un substrat (10); un film d'enregistrement métallique mince (20) formé sur ledit substrat ; une couche réfléchissante (40) disposée au-dessus dudit film d'enregistrement métallique mince (10) ; et une couche tampon apte à la déformation (30) interposée entre ledit film d'enregistrement mince (20) et ladite couche réfléchissante (40), le procédé comprenant l'étape de chauffage dudit film d'enregistrement métallique mince (20) entre ledit substrat (10) et ladite couche tampon (30) à l'aide d'un faisceau laser pour produire une déformation dans au moins un dudit substrat (10), dudit filtre d'enregistrement métallique mince (20) et de ladite couche tampon (30), **caractérisé en ce que** ledit substrat comporte-une pré-rainure, **en ce que** ladite couche réfléchissante est apte à la déformation et **en ce que** le chauffage dudit film d'enregistrement métallique mince (20) entraîne également la déformation de ladite couche réfléchissante (40) dans une région de la pré-rainure, formant en conséquence des micro-cuvettes où la déformation a lieu, lesquelles micro-cuvettes représentent ledit signal.

2. Support d'enregistrement optique sur lequel un signal a été enregistré par un procédé selon la revendication 1.

3. Support d'enregistrement optique selon la revendication 2 comprenant, en outre, une couche protectrice (50) disposée sur ladite couche réfléchissante (40).

4. Support d'enregistrement optique selon la revendication 2 ou 3, dans lequel au moins l'un dudit substrat pré-rainuré (10), dudit film d'enregistrement métallique mince (20) et de ladite couche tampon (30) est conçu pour se déformer.

5. Support d'enregistrement optique selon la revendication 4, dans lequel l'intégralité dudit substrat (10) dudit film d'enregistrement métallique mince (20) et de ladite couche tampon (30) sont conçus pour se déformer dans une région de la pré-rainure.

6. Support d'enregistrement optique selon la revendication 5, dans lequel ledit substrat (10), ledit film d'enregistrement métallique mince (20) et ladite couche tampon (30) sont conçus pour se déformer dans une région de la pré-rainure de sorte que ladite couche tampon (30) comporte une partie d'épaisseur réduite (d2) dans ladite région.

7. Support d'enregistrement optique selon l'une quelconque des revendications 2 à 6, dans lequel ladite couche tampon (30) comprend un matériau organique.

8. Support d'enregistrement optique selon l'une quelconque des revendications 2 à 7, dans lequel ladite couche réfléchissante (40) est conçue pour se déformer dans une région de la pré-rainure.

9. Support d'enregistrement optique selon l'une quelconque des revendications 2 à 8, dans lequel ledit film d'enregistrement métallique mince (20) possède un indice de réfraction complexe dont la partie imaginaire est supérieure ou égale à 0,01.

10. Support d'enregistrement optique selon l'une quelconque des revendications 2 à 9, dans lequel ledit film d'enregistrement métallique mince (20) présente une épaisseur dans la gamme de 30A à 500A.

11. Support d'enregistrement optique selon l'une quelconque des revendications 2 à 10, dans lequel ledit film d'enregistrement métallique mince (20) comprend un matériau choisi dans le groupe constitué de Au, Al, Ag, Pt, Cu, Cr, Ni, Ti, Ta, Fe et de leurs alliages.

12. Support d'enregistrement d'optique selon l'une quelconque des revendications 2 à 11, dans lequel ladite couche tampon (30) présente une épaisseur dans la gamme de 50A à 10000A.

13. Support d'enregistrement optique selon l'une quelconque des revendications 2 à 12, dans lequel ladite couche tampon (30) présente une température de transition vitreuse à l'intérieur d'un domaine de 60°C à 180°C.

14. Support d'enregistrement optique selon l'une quelconque des revendications 2 à 13, dans lequel ladite couche tampon (30) contient un colorant organique (de préférence inférieur à 30 % en poids).

15. Support d'enregistrement optique selon l'une quelconque des revendications 2 à 14, dans lequel ladite couche réfléchissante (40) comprend un matériau choisi dans le groupe constitué de Au, Al, Ag, Pt, Cu, Cr, Ni, Ti, Ta, Fe et de leurs alliages.

16. Support d'enregistrement optique selon l'une quelconque des revendications 2 à 15, dans lequel ledit film d'enregistrement métallique mince (20) possède une conductivité thermique de pas plus de 4 W/cm°C.
